# EUROPÄISCHE PATENTSCHRIFT

(11) **EP 0 563 648 B1**
(45) Veröffentlichungstag und Bekanntmachung des Hinweises auf die Patenterteilung: **10.07.1996**
(21) Anmeldenummer: 93104030.7
(22) Anmeldetag: 12.03.1993
(51) Int. Cl.: E06B 7/16, B65G 69/00

(54) **Verformbare Dichtung des Spaltes zwischen dem Rand einer Gebäudeöffnung und dem Heck eines an diese herangefahrenen Fahrzeuges**
Flexible sealing of the gap between the edge of an opening in a building and the rear of a vehicle drawn up to the same
Joint d'étanchéité déformable pour la fente entre le bord d'une ouverture de bâtiment et l'arrière d'un véhicule s'y approchant

(30) Priorität: 28.03.1992 DE 4210298
(43) Veröffentlichungstag der Anmeldung: 06.10.1993
(73) Patentinhaber: Alten, Kurt, D-30974 Wennigsen (DE)
(72) Erfinder: Alten, Kurt, D-30974 Wennigsen (DE)
(74) Vertreter: Depmeyer, Lothar

(56) Entgegenhaltungen:
- DE-A- 4 111 367
- US-A- 4 349 992

## Beschreibung

Die Erfindung betrifft eine verformbare Dichtung des Spaltes zwischen dem Rand einer Gebäudeöffnung und dem Heck eines an diese herangefahrenen Fahrzeuges nach dem Oberbegriff des Patentanspruchs 1. Eine solche Dichtung ist durch DE-A-4111367 bekannt.

Der frei herabhängende Überhang führt zwar bereits zu einer Spaltüberbrückung zwischen der Dachplane und den seitlichen Bespannungen bzw. Tragkörpern, jedoch ist eine gehörige Abdeckung und Abdichtung in vorderen oberen Eckbereich der Dichtung insb. bei starker Windeinwirkung nicht gegeben. Diese Nachteile sollen aufgrund der Erfindung beseitigt werden, indem also die Abdichtung im vorgenannten Sinne verbessert wird.

Zur Lösung dieser Aufgabe sind erfindungsgemäss die dem Gebäude abgekehrten, vorderen Ränder des Überhanges fest mit den seitlich aussen gelegenen Rändern des Querteils verbunden, was durch unmittelbares Verbinden oder aber auch durch Hinterlegen von schmalen Streifen erfolgen kann.

Durch diese Verbindung ergibt sich im Bereich der Dachplane nach vorne und zur Seite hin eine umlaufende kleinere Schürze, die Regen und dgl. auch dann nicht eintreten lässt, wenn die Dachplane mit Querteil und Überhang angehoben wird. Von besonderer Bedeutung ist dabei die Erfindung bei solchen Dichtungen, deren seitliche Tragkörper von umkleideten Schaumstoffkörpern gebildet sind, in die von oben her Wasser eindringen könnte, wenn nicht für eine Abdichtung im Dachbereich Sorge getragen ist.

Weitere Einzelheiten der Erfindung werden anhand der Zeichnung erläutert, in der ein Ausführungsbeispiel der Erfindung dargestellt ist.

Es zeigen :

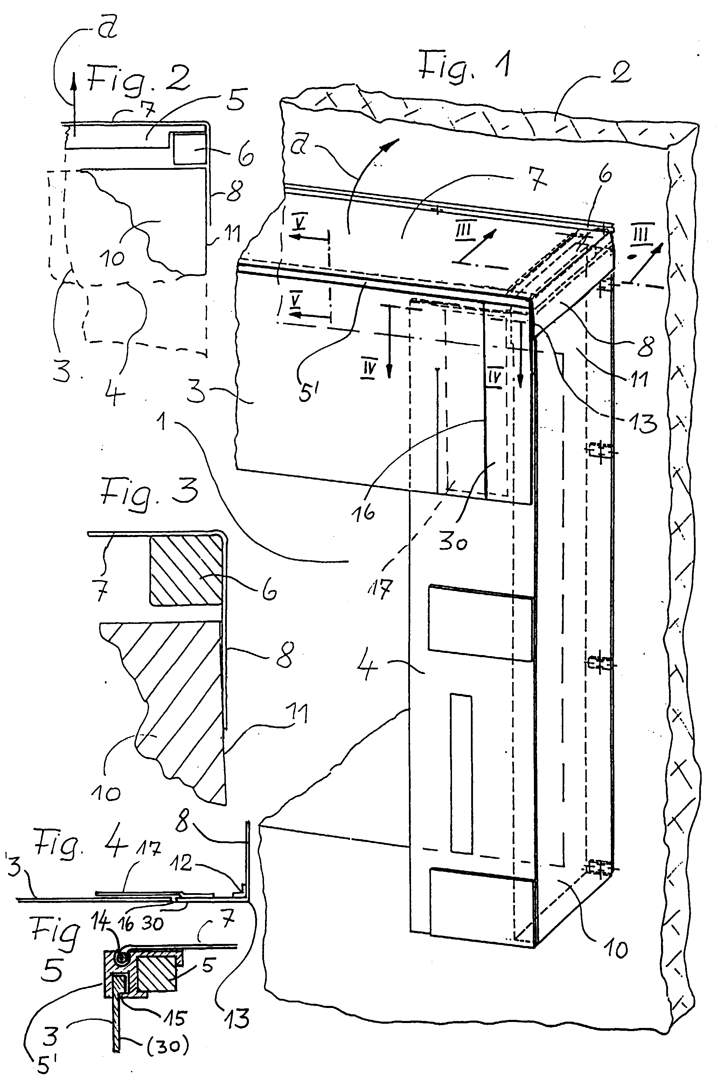

- Fig. 1: die rechte Hälfte einer am Rand einer Gebäudeöffnung befindlichen, verformbaren Dichtung in schaubildlicher Darstellung,
- Fig. 2: eine Teilstirnansicht der Dichtung gemäss Fig. 1, und zwar im rechten, oberen Eckbereich,
- Fig. 3: einen Teilschnitt nach der Linie III - III von Fig. 1,
- Fig. 4: einen Teilschnitt nach der Linie IV - IV von Fig. 1 und
- Fig. 5: einen Teilschnitt nach der Linie V - V von Fig. 1.

Die Gebäudeöffnung 1 des Gebäudes mit Wandung 2 kann durch ein Sektionaltor verschlossen werden; vor der Gebeäudeöffnung 1 befindet sich die erfindungsgemässe verformbare Dichtung.

Diese Dichtung soll den Spalt zwischen einem andockenden Fahrzeug und dem Rand der Gebäudeöffnung 1 abdichten. Im Abstand von der Wandung 2 ist daher eine verformbare Schürze aus einem oben gelegenen Querteil 3 und einem zu beiden Seiten der Gebäudeöffnung 1 befindlichen senkrechten Streifen 4 vorgesehen. Diese Elemente 3, 4 bestehen aus einem verformbaren, reissfesten Material z.B. einem gummierten Gewebe. Diese Schürze soll sich der Gestalt des Fahrzeuges anpasssen können.

Das Querteil 3 ist gardinenartig am oberen Rand an einem Querträger 5 mit daran befestigter Profilschiene 5' aufgehängt. Von dem Querträger 5 aus erstreckt sich eine Dachplane 7 nach hinten, die an der Wandung 2 verankert ist. Die Enden des Querträgers 5 liegen lose auf dem freien Ende eines an der Wandung gelagerten, waagerechten Armes 6 auf. Der Querträger 5 ist zudem durch sich nach hinten erstreckende Lenker - nicht dargestellt - im Sinne des Pfeiles a verschwenkbar, um so die Dachplane 7, den Querträger 5 und das Querteil 3 nach oben bewegen zu können, wenn dies z.B. für das Andocken von Sattelschleppern erforderlich wird.

Die an ihrem oberen Ende hinter dem Querteil 3 befindlichen Streifen 4 sind am freien Ende von Tragkörpern lo befestigt, die eine seitlich aussen gelegene Bespannung 11 aufweisen, um den Raum zwischen der Wandung 2 und den Streifen 4 zu überbrücken bzw. abzudichten. Die Tragkörper lo sind zudem elastisch nachgiebig, also in Richtung auf das Gebäude verformbar. Sie werden von Schaumstoffblöcken gebildet, können aber auch andere Tragelemente aufweisen.

Um den Spalt zwischen der Bespannung 11 und der Dachplane 7 abzudichten, ist diese mit einer einen Überhang 8 bildenden Verlängerung versehen, die das obere Ende der Tragkörper 1o bzw. der Bespannung 11 überdeckt und frei herabhängt. Zudem ist der vordere Rand 13 des Überhangs 8 mit dem seitlich aussen gelegenen Rand des Querteils 3 wasserdicht verbunden, was durch Verkleben od. dgl. bzw. durch Hinterlegen eines Streifens 12 herbeigeführt werden kann. Damit kann die Verlängerung 8 z.B. bei Windeinwirkung nicht abheben, und es ist auch dann im oberen Eckbereich ein Abdichtung sichergestellt, wenn die Dachplane 7 mit den hiermit verbundenen Teilen nach oben verschwenkt werden sollte.

Wie aus Fig. 5 erkennbar ist, erfolgt die Befestigung des vorderen Endes der Dachplane 7 durch Einführen in eine hinterschnittene Nut 14 der Profilschiene 5', während das obere, verdickte Ende des Querteils 3 in eine andere Längsnut 15 mit Hinterschneidung eingeführt wird. Um unter diesen Voraussetzungen die Montage zu vereinfachen, ist das Querteil 3 an seinen beiden Enden geteilt. Es ist ein mit der Verlängerung 8 verbundener Endabschnitt 3o vorgesehen, der nach der Montage des Mittelteils leicht in das Ende der Profilschiene 5' eingeführt werden kann. Um den senkrechten Stumpfstoss 16 abzudichten, ist der Endabschnitt 3o mit einer Lasche 17 versehen, der den Spalt überbrückt, wobei es sich versteht, dass alle Teile biegsam und verformbar sind. Vorzugsweise wird der Stumpfstoss 16 bzw. die Breite des Endabschnittes 3o so gewählt, dass sich der Stumpfstoff 16 noch vor den Streifen 4 befindet.

Es sei erwähnt, dass das Querteil 3, insb. aber die beiden Endabschnitte 3o zweckmässigerweise durch kleine Schrauben od. dgl. an der Profilschiene 5' fixiert werden, um ein ungewolltes Herausrutschen zu verhindern.

Erwähnt sei ferner, dass die Länge der den Überhang 8 bildenden Verlängerung beliebig gewählt und auf die gewünschte Hubbewegung der Dachplane 7 abgestimmt werden kann.

## Patentansprüche

1. Verformbare Dichtung des Spaltes zwischen dem Rand einer Gebäudeöffnung (1) und dem Heck eines an diese Rand einer Gebäudeöffnung und dem Heck eines an diese herangefahrenen Fahrzeuges mit einer lappigen, verformbaren Schürze aus zwei zu beiden Seiten der Gebäudeöffnung (1) befindlichen, senkrechten Streifen (4) und einem im Bereich der oberen Streifenenden befindlichen und vor diesen Enden befindlichen Querteil (3), das an einem Querträger (5) aufgehängt ist, von dem aus sich eine Dachplane (7) zum Gebäude hin erstreckt, wobei die beiden senkrechten Streifen (4) vorne an einem Tragkörper (10) mit seitlicher Bespannung (11) als Verbindung von den seitlichen Rändern der senkrechten Streifen (4) zum Gebäude hin befestigt sind, der Tragkörper (10) unabhängig von der Dachplane (7) und dem Querteil (3) elastisch nachgiebig in Richtung auf das Gebäude verformbar sind und wobei weiterhin die Dachplane (7) an beiden Enden mit einem frei herabhängenden Überhang (8) versehen ist, der das obere Ende des Tragkörpers (10) bzw. der Bespannung (11) überdeckt, dadurch gekennzeichnet, dass die dem Gebäude (2) abgekehrten, vorderen Ränder (13) der Überhänge (8) fest mit den seitlich aussen gelegenen Rändern des Querteils (3) verbunden sind.

2. Dichtung nach Anspruch 1, dadurch gekennzeichnet, dass die Ränder (13) durch Kleben od. dgl. und ggfs. durch Hinterlegen eines Streifens (12) verbunden sind.

3. Dichtung nach Anspruch 1, dadurch gekennzeichnet, dass die dem Überhang (8) zugekehrten Endabschnitte (30) des Querteils (3) von dem übrigen Teil des Querteils (3) getrennt sind und dass die Endaschnitte (30) und der übrige Teil dicht bei dicht an dem Querträger (5) angeordnet sind unter Bildung einer vorzugsweise senkrechten Fuge (16).

4. Dichtung nach Anspruch 3, dadurch gekennzeichnet, dass an der Rückseite der Endabschnitte (30) eine Lasche (17) befestigt ist, die die Fuge (16) überdeckt.

5. Dichtung nach Anspruch 3, dadurch gekennzeichnet, dass sich die Fuge (16) im Bereich der senkrechten Streifen (4) bzw. vor diesen Streifen befindet.

6. Dichtung nach Anspruch 3, dadurch gekennzeichnet, dass die Endabschnitte (30) gegen Herausrutschen aus ihren Befestigungsprofilen (5') gesichert sind.

7. Dichtung nach einem oder mehreren vorhergehenden Ansprüchen mit anhebbarer Dachplane (7) und entsprechend bewegbarem Querteil (3).

8. Dichtung nach einem oder mehreren vorhergehenden Ansprüchen, bei der die Tragkörper (1o) bzw.deren tragende Elemente Blöcke aus weich eingestelltem Elastomerschaum sind.

## Claims

1. Deformable seal for sealing the gap between the edge of a building opening (1) and the rear of a vehicle which has been driven up to said opening, having a soft, deformable apron formed from two vertical strips (4), which are situated on both sides of the building opening (1), and one transverse member (3), which is situated in the region of the upper strip ends and is situated in front of these ends, said transverse member being suspended from a cross-piece member (5), from which a top cover (7) extends towards the building, the two vertical strips (4) being mounted on the front of a supporting body (10) provided with a lateral covering (11) as the means for connecting the lateral edges of the vertical strips (4) to the building, the supporting body (10) being deformable in an elastically resilient manner in a direction towards the building independently of the top cover (7) and the transverse member (3), and, moreover, the top cover (7) being provided at both ends with a freely downwardly hanging curtain (8), which covers the upper end of the supporting body (10), or respectively of the covering (11), characterised in that the front edges (13) of the curtains (8) remote from the building (2) are securely connected to the lateral external edges of the transverse member (3).

2. Seal according to claim 1, characterised in that the edges (13) are connected by gluing or the like and are possibly connected by placing a strip (12) therebehind.

3. Seal according to claim 1, characterised in that the end portions (30) of the transverse member (3) facing the curtain (8) are separated from the remaining portion of the transverse member (3), and in that the end portions (30) and the remaining portion are disposed close up to one another on the cross-piece member (5) so as to form a joint (16) which is preferably vertical.

4. Seal according to claim 3, characterised in that a cover plate (17) is mounted on the rear surface of the end portions (30) and covers the joint (16).

5. Seal according to claim 3, characterised in that the joint (16) is situated in the region of the vertical strips (4) or respectively in front of these strips.

6. Seal according to claim 3, characterised in that the end portions (30) are prevented from slipping out of their mounting profiles (5').

7. Seal according to one or more of the preceding claims, having a raisable top cover (7) and an appropriately displaceable transverse member (3).

8. Seal according to one or more of the preceding claims, wherein the supporting bodies (10), or respectively their supporting elements, are blocks formed from soft-set elastomeric foam.

## Revendications

1. Dispositif d'étanchéité déformable de l'intervalle compris entre le bord d'une baie (1) de bâtiment et l'arrière d'un véhicule automobile qui s'en rapproche, comportant une jupe flasque déformable qui est constituée de deux bandes (4) verticales se trouvant de part et d'autre de la baie (1) de bâtiment et d'une partie (3) transversale qui se trouve dans la région des extrémités supérieures des bandes et devant ces extrémités et qui est suspendue à une traverse (5) à partir de laquelle s'étend une bâche (7) de toiture jusqu'au bâtiment, les deux bandes (4) verticales étant fixées à l'avant à un support (10) comportant un tissu (11) tendu latéral en tant que liaison des bords latéraux des bandes (4) verticales avec le bâtiment, le support (10) étant déformable tout en pouvant céder élastiquement en direction du bâtiment indépendamment de la bâche (7) de toiture et la partie (3) transversale, et les deux extrémités de la bâche (7) de toiture étant de plus munies d'un pan (8) qui pend librement et qui recouvre l'extrémité supérieure du support (10) et du tissu (11) tendu, caractérisé en ce que les bords (13) avant des pans (8) qui sont éloignés du bâtiment (2) sont reliés de manière rigide aux bords de la partie (3) transversale qui sont placés latéralement à l'extérieur.

2. Dispositif d'étanchéité suivant la revendication 1, caractérisé en ce que les bords (13) sont reliés par collage ou analogue et éventuellement en les doublant d'une bande (12).

3. Dispositif d'étanchéité suivant la revendication 1, caractérisé en ce que les tronçons (30) d'extrémité de la partie (3) transversale qui sont tournés vers le pan (8) sont séparés du reste de la partie (3) transversale et que les tronçons (30) d'extrémité et la partie restante sont montés étroitement à la traverse (5) en formant une contiguïté (16) de préférence verticale.

4. Dispositif d'étanchéité suivant la revendication 3, caractérisé en ce qu'il est fixé au dos des tronçons (30) d'extrémité une patte (17) qui recouvre la partie (16) de contiguïté.

5. Dispositif d'étanchéité suivant la revendication 3, caractérisé en ce que la partie (16) de contiguïté se trouve dans la région des bandes (4) verticales et devant ces bandes.

6. Dispositif d'étanchéité suivant la revendication 3, caractérisé en ce que les tronçons (30) d'extrémité sont bloqués afin de les empêcher de tomber de leurs profilés (5') de fixation.

7. Dispositif d'étanchéité suivant une ou plusieurs des revendications précédentes comportant une bâche (7) de toiture qui peut être soulevée et une partie (3) transversale qui peut être déplacée en conséquence.

8. Dispositif d'étanchéité suivant une ou plusieurs des revendications précédentes, dans lequel les supports (10) et leurs éléments porteurs sont des blocs de mousse d'élastomères rendus souples.
